Europäisches Patentamt

(19) European Patent Office

Office européen des brevets

(11) Publication number: **0 101 103**
**A2**

(12) **EUROPEAN PATENT APPLICATION**

(21) Application number: **83200866.8**

(22) Date of filing: **13.06.83**

(51) Int. Cl.³: **B 67 D 1/14**
**F 16 K 24/06**

(30) Priority: **11.06.82 NL 8202361**

(43) Date of publication of application:
**22.02.84 Bulletin 84/8**

(84) Designated Contracting States:
**AT BE CH DE FR GB IT LI LU NL SE**

(71) Applicant: **TAPTOMAT-EUROPE B.V.**
**van Houten Industriepark 11**
**NL-1381 MZ Weesp(NL)**

(72) Inventor: **Kronenberg, Johann**
**Grote Nieuwedijk 363**
**Mechelen(BE)**

(74) Representative: **de Vries, Johannes Hendrik**
**Fokke et al,**
**Octrooibureau Los en Stigter B.V. P.O. Box 20052**
**NL-1000 HB Amsterdam(NL)**

(54) Faucet for dispensing beer or the like.

(57) The faucet (1, 49) is provided with a faucet body (2) in which a channel (3) with a first channel part (5) is formed, which first channel part passes into a dispensing part (6) through an obtuse bend. Downstream of the bend of the channel (3) a valve seat (8) is formed, while a bore (19) directed away from the dispensing part (6) is formed in the faucet body (2) in a direct line with said dispensing part (6), in which a valve stem (10) of a main valve (9) cooperating with the valve seat (8) extends. Thereby, the main valve (9) can be retracted at least partially out of the channel (3) into the bore (19) so that the faucet (1, 49) can be cleaned in the usual manner. Moreover, the pressure prevailing in the beer conduit acts on the main valve (9) in closing direction.

fig.2

EUR.66/10-dV/kvn — /—

0101103

Faucet for dispensing beer or the like.

The invention relates to a faucet for dispensing beer or the like, comprising a faucet body with a channel, one end of which is connectable to a beer conduit, said channel including a first channel part which passes into a dispensing part through an obtuse bend, wherein a valve seat is formed in said channel and a main valve is provided, adapted to cooperate with said valve seat for closing the channel, said main valve being coupled by a valve stem to an actuating means for moving the main valve from a closed position to an open position and vice versa.

Such a faucet is disclosed in US-A-4.111.243. At this known faucet the valve seat is formed near the end of the channel connectable to the beer conduit, wherein the valve stem of the main valve extends in the first channel part.This valve stem extends past the bend in the channel, where the end of the valve stem is coupled to the actuating means. Thereby, this known faucet shows the disadvantage that the faucet and the beer conduit connected thereto can not be cleaned in the prescribed manner by means of a hard sponge body forced through the beer conduit under pressure. Therefore, this known faucet is deemed unallowable by the authorities in charge of the cleaning of beer conduits. Moreover this known faucet is not provided with means for forming a good foam collar on a tapped glass of beer, if necessary.

The invention aims to provide a faucet of the above-mentioned kind, wherein said said disadvantages are obviated in a simple, but nevertheless effective manner.

To this end, the faucet according to the invention is characterized in that the valve seat is situated downstream of the bend of the channel and in that a bore directed away from the dispensing part is formed in the faucet body in a direct line with said dispensing part, wherein the valve stem of the main valve extends in said bore in such a manner that the main valve can be retracted at least partially out of the channel into the bore.

In this manner it is obtained that in order to clean the faucet and the beer conduit connected thereto, the main valve can be retracted out of the channel in the bore for the most part, so that the hard sponge body used for cleaning can pass the valve unimpeded. Thereby, a thorough cleaning of the faucet and the beer conduit is possible in the conventional manner.

According to a favourable embodiment the valve stem is borne in a bushing detachably mounted in the bore. By removing the bushing with the valve stem and the main valve, the faucet can be cleaned completely, while possibly warm sealing elements can easily be renewed.

According to a preferred embodiment of the invention a by-pass is formed in the faucet body, which by-pass bridges the main valve in the closed position, wherein the passage opening of the by-pass is substantially smaller than the same of the channel, and in that a closing member is provided in the by-pass for closing the by-pass, said closing member being movable between a closed position and an open position. Thereby, a small beer flow can be led past the main valve by opening the closing member, which small beer flow forms a good and steady foam flow when it emerges in the channel with a relatively wide diameter, so that an attractive foam collar on a glass of beer already tapped can be obtained.

According to a favourable embodiment of the invention a discharge valve is provided for discharging the dispensing part of the channel downstream of the main valve during operation. In this manner it is obtained that a predetermined amount of beer is always dispensed by opening the main valve during a fixed time interval, wherein substantially no leaking occures anymore after closing the main valve.

Preferably the discharge valve is operated by the pressure prevailing in the first channel part during operation. Thereby a very simple faucet is obtained.

According to the invention a pressure chamber is formed in the first channel part to this end, a wall of which pressure chamber being formed by a membrane connected with a valve stem of the discharge valve, wherein a spring is provided for biasing the discharge valve in the closed position when the main valve is in the open position, wherein the spring force exerted on the discharge valve is such that when the main valve is in the closed position, the discharge valve is opened by the membrane in response to the pressure

**0101103**

prevailing in the first channel part during operation. In this manner a simple and robust construction of the faucet with discharge valve is obtained.

The invention will hereinafter be further explained by reference to the drawings in which two embodiments of the faucet according to the invention are shown.

Fig. 1 schematically shows a cross-section of a first embodiment of the faucet according to the invention.

Fig. 2 schematically shows a cross-section of a second embodiment of the faucet according to the invention.

The faucet 1 shown is provided with a faucet body 2 in which a channel 3 is provided, which channel 3 is connectable with one end to a beer conduit not shown by means of a special cap nut construction 4. The channel 3 comprises a first channel part 5 which passes into a dispensing part 6 through an obtuse bend, wherein the dispensing part 6 consists partially of an outlet 7 connected to the faucet body 2.

Downstream of the bend of the channel a valve seat 8 is formed in the channel, while a main valve 9 is mounted in the channel adapted to cooperate with said valve seat 8 for closing the channel 3. The main valve 9 is coupled by a valve stem 10 to an actuating means 11 formed as an elektromagnet and accomodated in a casing 12 mounted on the faucet body 2 and only partially shown in the drawings. To this end, the valve stem 10 is provided with a coupling piece 13 and its end opposite of the main valve 9, a finger 14 of a lever 16 pivotably mounted on a spindle 15 projecting in said coupling piece 13. The other end of the lever 16 is coupled with the armature 17 of the actuating means 11. By energizing the actuating means 11 the main valve 9 is lifted from the valve seat 8,wherein the main valve 9 is pressed on the valve seat 8 by means of a spring 18 after de-energizing the actuating means 11. The pressure prevailing in the beer conduit acts upon the main valve 9 in closing direction in a favourable manner.

As appears from the drawings, the valve stem 10 of the main valve 9 extends into a bore 19 directed away from the dispensing part 6 and formed in the faucet body 2 in a direct line with said dispensing part 6. The valve stem 10 is borne in a bushing 20, wherein a sealing on the valve stem 10 is obtained by means of two O-rings 21. An O-ring 22 forms a seal-

ing between the bushing 20 and the wall of the bore 19. The bushing 20 is locked in the bore 19 by a bolt 23, wherein the bushing 20 can be removed from the bore 19 by screwing in the bolt 23.

When the casing 12 is opened, the main valve 9 can be retracted out of the channel 3 into the bore 19 for the most part by manually operating the lever 16 so that the channel 3 is substantially completely free. Thereby it is obtained that the faucet 1 and the beer conduit connected thereto can be thoroughly cleaned, for which normally a cleaning fluid is forced through the beer conduit and the channel 3 and a hard sponge body is moved under pressure through the beer conduit and the channel 3. Moreover, by taking out the bushing 20 with the main valve 9 this part of the faucet 1 can also be cleaned separately. Further renewing of possibly worne sealing elements of the main valve 9 is very simple.

A by-pass 24 is provided in the faucet body 2, which by-pass 24 bridges the main valve 9 in the closed position. This by-pass 24 consists of a first bore 25 connected to the channel 3 ahead of the main valve 9 and opening into a cylindrical chamber 26. The cylindrical chamber 26 passes into a second bore 28 through a conical valve seat 27, wherein the second bore opens into the dispensing part 6 of the channel 3. A cylindrical closing body 29 is accomodated in the cylindrical chamber 26, which closing body 29 cooperates with the conical valve seat 27. The closing body 29 is pressed in the closed position on the valve seat 27 by a spring 30 and can be moved to the open position by means of a manually operable lever 31. As shown in the drawings, the passage opening of the first bore 25 is substantially smaller than the passage opening of the channel 3, whereas the passage opening of the bore 28 is smaller than that of the first bore 25.

By actuating the lever 31 a small beer flow is thus led past the main valve 9, which beer flow forms a foam flow when it comes out of the bore 28 in the much wider dispensing part 6, by means of which foam flow an attractive and steady foam collar can be obtained on a glass of beer already tapped.

In order to prevent that beer remains behind in the dispensing part 6 and the outlet 7 after closing the main valve 9, whereby by opening the main valve 9 during a predetermined period an accurately determined amount of beer would not be dispensed and a long leaking could occur, a discharge valve 32 is provided for discharging during operation the dispensing part 6 of the channel 3 downstream of the main valve 9 when the main valve 9 is in the closed position. The discharge valve 32 comprises a body 33 which is screwed in the faucet body 2 and clamps with its upper side a circular membrane 34 in the faucet body. The membrane 34 formes the base of a substantially conical pressure chamber 35 formed in the first channel part 5. The axis of this conical pressure chamber 35 is at least substantially perpendicular to the axis of the first channel part 5 and the conical wall of the pressure chamber 35 smoothly merges along its entire circumference into the cilindrical wall of the first channel part 5. Thereby it is prevented that undesired whirls will occur in the beer flowing through the first channel part 5.

The membrane 34 is connected to a valve stem 36 carrying a sealing ring 37. The sealing ring 37 cooperates with a seat 38 formed in the body 33. Between the membrane 34 and the seat 38 lies a room 39 connected to the dispensing part 6 of the channel through a bore 40. The room under the seat 38 is connected to the open air.

The discharge valve 32 is pressed in the closed position shown by a spring 41 lying between the underside of the valve stem 36 and an end wall 42 of a nut 43 screwable in the body 33. The force exerted on the valve stem 36 by the spring 41 is smaller than the force exerted on the membrane 34 by the pressure prevailing in the beer conduit when the main valve 9 is closed so that the beer pressure holds the discharge valve 32 in the open position during operation when the main valve 9 is closed. If actuating means 11 lifts the main valve 9 from the valve seat 8, the pressure prevailing in the channel part 5 substantially decreases, whereby the spring 42 immediately moves the discharge valve 32 into the closed position. Thereby, a good glass of beer can be tapped as air is not sucked with the beer. As soon as the actuating means 11 is de-energized and the spring 18 presses the main valve 9 on the valve seat 8 again, the discharge valve 32 is opened by the pressure prevailing in the channel part 5 so that the dispensing part 6 and the outlet 7 completely empty themselves. In this manner, a determined amount of beer is dispensed under all circumstances by opening the main valve 9 during a predetermined time interval, wherein substantially no leaking occurs after closing the main valve 9.

By turning the nut 43 the discharge valve 32 can be easily adapted to the adjusted beer pressure.

It is noted that the actuating means 11 can be operated by an electronic control unit (not shown) in a manner known per se. To this end, some buttons are provided on the casing 12, by means of which the user can indicate whether a big glass of beer or a small glass of beer should be dispensed, whereas moreover a button is provided which makes it possible to continuously dispense beer, wherein the dispensing can be ended by pressing a stop button. If, for example, a big glass of beer should be dispensed, the corresponding button is pressed, whereafter a glass is pressed against a lever 44 under the outlet 7, an end 45 of said lever 44 extending in the casing 12 operates a micro-switch 46. The micro-switch 46 is connected to the electronic control unit which subsequently energizes the actuating means 11 during a predetermined time interval and also increments the count of a counter for counting the number of big glasses of beer tapped. After the expiration of the predetermined time interval the control unit stops the energizing of the actuating means 11, whereby the main valve 9 is closed again. If for some reason a good foam collar is not obtained, a foam collar can be formed on the glass of beer tapped by operating the lever 31 in the manner described. The lever 31 operates with an end 47 also extending in the casing a micro-switch 48 connected to the electronic control unit. Thereby, the control unit can keep the time during which the lever 31 is operated, for example.

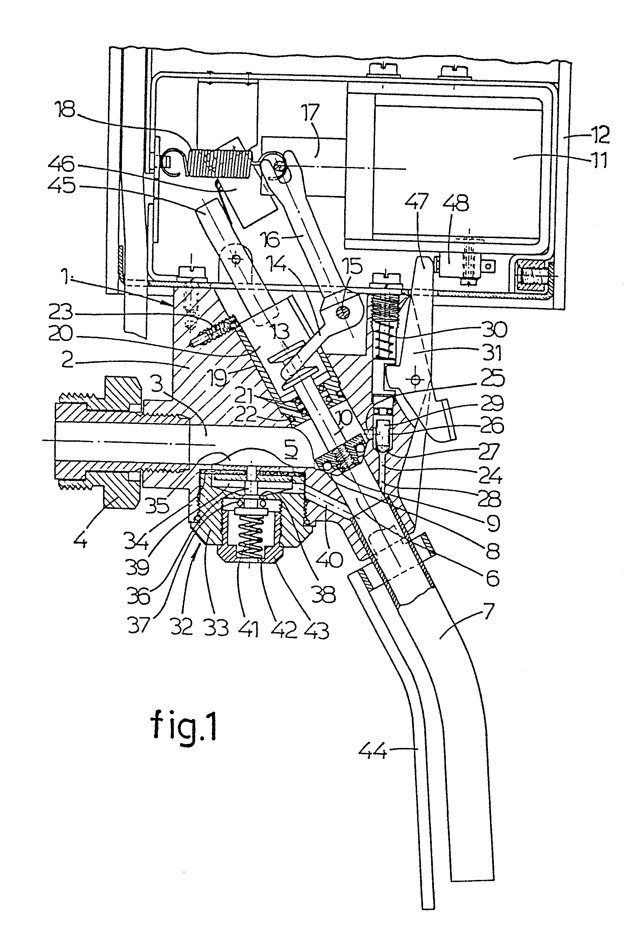

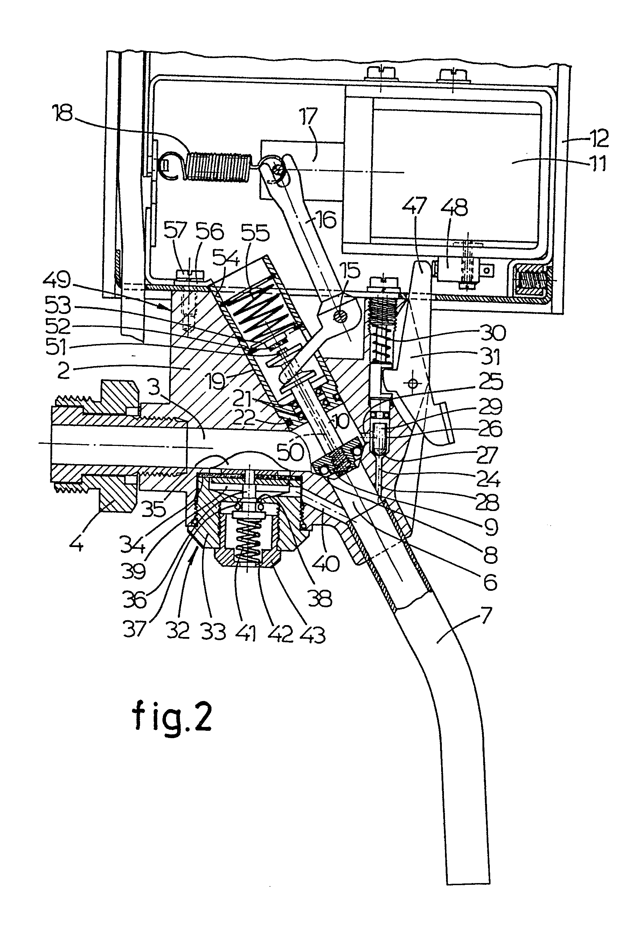

Fig. 2 shows a second embodiment of the faucet according to the invention which is constructed mainly in the same manner as the faucet according to fig. 1 and wherein corresponding parts are indicated by the same reference numbers.

At the faucet 49 shown in fig. 2 a bore 50 extends through the valve stem 10 and the main valve 9, which bore 50 debouches within an upwardly protruding rim 51 at the end of the valve stem 10 opposite of the main valve 9. At a small distance above said end of the valve stem 10 lies a sealing disc 52 fixed on a supporting plate 53. At the faucet 49 the valve stem 10 is borne in a bushing 54 in which the supporting plate 53 is slidingly guided also against the action of a spring 55. The bushing 54 is maintained at its position in the bore 19 by a locking plate 56 so that by detaching the screw 57 the bushing 54 can be easily removed for cleaning purposes and the like.

The bore 50 provides a discharge of the dispensing part 6 of the channel 3 downstream of the main valve 9 when the main valve 9 is in the closed position. As soon as the lever 16 moves the main valve 9 into the open position, the upwardly protruding rim 51 sealingly engages the sealing disc 52 so that air is not sucked during dispensing beer. The sealing disc 52 and the supporting plate 53 will be pressed upwardly against the action of the spring 55. When the main valve 9 moves to the closed position again, the upwardly protruding rim 51 comes free from the sealing disc 52 so that the dispensing part 6 is discharged.

If desired, the discharge valve 32 can be omitted at this embodiment.

The invention is not restricted to the embodiments described above which can be varied within the scope of the invention in a number of ways.

**0101103**

## CLAIMS

1. Faucet for dispensing beer or the like, comprising a faucet body with a channel, one end of which is connectable to a beer conduit, said channel including a first channel part which passes into a dispensing part through an obtuse bend, wherein a valve seat is formed in said channel and a main valve is provided, adapted to cooperate with said valve seat for closing the channel, said main valve being coupled by a valve stem to an actuating means for moving the main valve from a closed position to an open position and vice versa, characterized in that the valve seat is situated downstream of the bend of the channel and in that a bore directed away from the dispensing part is formed in the faucet body in a direct line with said dispensing part, wherein the valve stem of the main valve extends in said bore in such a manner that the main valve can be retracted at least partially out of the channel into the bore.

2. Faucet according to claim 1, characterized in that the valve stem is borne in a bushing detachably mounted in the bore.

3. Faucet according to claim 1 or 2, characterized in that a by-pass is formed in the faucet body, which by-pass bridges the main valve in the closed position, wherein the passage opening of the by-pass is substantially smaller than the same of the channel, and in that a closing member is provided in the by-pass for closing the by-pass, said closing member being movable between a closed position and an open position.

4. Faucet according to claim 3, characterized in that the by-pass is formed by a first bore connected to the channel ahead of the main valve and opening into a substantially cylindrical chamber which passes into a second bore through a conical seat, said second bore opening into the dispensing part of the channel, wherein the closing member consists of a cylindrical closing body lying in said cylindrical chamber, the diameter of said cylindrical closing body being smaller than that of the chamber and one end of said cylindrical closing body cooperating with said conical seat.

5. Faucet according to claim 4, characterized in that the diameter of the first bore is greater than that of the second bore.

6. Faucet according to claim 3, 4 or 5, characterized in that the closing member is pressed in the closed position by a spring and is movable into the open position by means of a manually operable lever.

7. Faucet according to anyone of the preceding claims, characterized by a discharge valve for discharging the dispensing part of the channel downstream of the main valve during operation.

8. Faucet according to claim 7, characterized in that the discharge valve is operated by the pressure prevailing in the first channel part during operation.

9. Faucet according to claim 7 or 8, characterized in that a pressure chamber is formed in the first channel part, a wall of which pressure chamber is formed by a membrane connected with a valve stem of the discharge valve.

10. Faucet according to claim 9, characterized by a spring for biasing the discharge valve in the closed position when the main valve is in the open position, wherein the spring force exerted on the discharge valve is such that when the main valve is in the closed position, the discharge valve is opened by the membrane in response to the pressure prevailing in the first channel part during operation.

11. Faucet according to claim 10, characterized in that the spring force exerted on the discharge valve by the spring is adjustable.

12. Faucet according to claim 9, 19 or 11, characterized in that the pressure chamber is made substantially conical, wherein the axis of the conical pressure chamber is at least substantially perpendicular to the axis of the first channel part and the conical wall of the pressure chamber smoothly merges along its entire circumference into the cylindrical wall of the first channel part, wherein the base of the conical pressure chamber is formed by the membrane.

13. Faucet according to anyone of the preceding claims, characterized in that a bore extending through the valve stem and the main valve is formed, and in that a sealing means is provided at a small distance above the end of the valve stem opposite of the main valve, said sealing means

0101103 ..

adapted to sealingly cooperate with the corresponding end of the bore.

14. Faucet according to claim 13, characterized in that the end of the valve stem opposite of the main valve is provided with an upwardly protruding rim, the bore debouching within said rim.

15. Faucet according to claim 13 or 14, characterized in that the sealing means is elastically supported.

16. Faucet according to claims 2 and 15, characterized in that the sealing means is fixed on a supporting plate slidingly guided in the bushing against the action of a spring.

fig.1

fig.2